(19) Europäisches Patentamt
European Patent Office
Office européen des brevets

(11) EP 3 904 448 A1

(12) EUROPEAN PATENT APPLICATION
published in accordance with Art. 153(4) EPC

(43) Date of publication:
03.11.2021 Bulletin 2021/44

(51) Int Cl.:
C08L 25/08 (2006.01)    C08L 55/02 (2006.01)
C08K 3/016 (2018.01)    C08K 5/00 (2006.01)
C08K 3/32 (2006.01)    C08K 3/22 (2006.01)

(21) Application number: 19906169.8

(22) Date of filing: 09.12.2019

(86) International application number:
PCT/KR2019/017314

(87) International publication number:
WO 2020/138759 (02.07.2020 Gazette 2020/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.12.2018  KR 20180171344

(71) Applicant: Lotte Chemical Corporation
Seoul, 05551 (KR)

(72) Inventors:
• JEONG, Hyun Taek
  Uiwang-Si Gyeonggi-do 16073 (KR)
• LEE, Jin Seong
  Uiwang-Si Gyeonggi-do 16073 (KR)
• OH, Hyun Ji
  Uiwang-Si Gyeonggi-do 16073 (KR)
• HEO, Jun Hyuk
  Uiwang-Si Gyeonggi-do 16073 (KR)
• KWON, Young Chul
  Uiwang-Si Gyeonggi-do 16073 (KR)

(74) Representative: Germain Maureau
12, rue Boileau
69006 Lyon (FR)

(54) THERMOPLASTIC RESIN COMPOSITION AND MOLDED ARTICLE PRODUCED THEREFROM

(57) A thermoplastic resin composition of the present invention is characterized by containing: about 100 parts by weight of a thermoplastic resin including rubber-modified vinyl-based graft copolymer and aromatic vinyl-based copolymer resins; about 10-50 parts by weight of a flame retardant other than a phosphorus-based compound; about 1.5-3.5 parts by weight of zinc oxide particles having an average particle size of about 0.2-3 $\mu$m and a BET specific surface area of about 1-10 m$^2$/g; and about 2.5-6.5 parts by weight of sodium phosphate. The thermoplastic resin composition has excellent antibacterial properties, flame retardant properties, and impact resistance properties.

Printed by Jouve, 75001 PARIS (FR)

**Description**

[Technical Field]

The present invention relates to a thermoplastic resin composition and a molded article produced therefrom. More particularly, the present invention relates to a thermoplastic resin composition having good properties in terms of antibacterial properties, flame retardancy, impact resistance, and the like, and a molded article formed of the same.

[Background Art]

As a thermoplastic resin, a rubber-modified aromatic vinyl copolymer resin such as an acrylonitrile-butadiene-styrene copolymer resin (ABS resin) has good properties in terms of mechanical properties, processability, external appearance, and the like, and is broadly used as interior/exterior materials for electric/electronic products, interior/exterior materials for automobiles, exterior material for buildings, and the like.

When such resins are used for applications entailing physical contact with the body, such as household electronic devices, and the like, the resins are required to have antibacterial properties to remove or suppress bacteria, flame retardancy to prevent fire hazards, and the like. Although an inorganic or organic antimicrobial may be used to obtain a thermoplastic resin composition having antibacterial properties, the inorganic antimicrobial may cause discoloration and deterioration in transparency and flame retardancy of the thermoplastic resin, and the organic antimicrobial may be decomposed or eluted during processing at high temperature, thereby making application thereof difficult in practice.

Therefore, there is a need for a thermoplastic resin composition that is excellent in both antibacterial properties and flame retardancy without deterioration in other properties such as impact resistance.

The background technique of the present invention is disclosed in Korean Patent No. 10-0988999.

[Disclosure]

[Technical Problem]

It is one object of the present invention to provide a thermoplastic resin composition having good properties in terms of antibacterial properties, flame retardancy, impact resistance, and the like.

It is another object of the present invention to provide a molded article formed of the thermoplastic resin composition.

The above and other objects of the present invention can be achieved by the present invention described below.

[Technical Solution]

1. One aspect of the present invention relates to a thermoplastic resin composition. The thermoplastic resin composition comprises about 100 parts by weight of a thermoplastic resin comprising a rubber-modified vinyl graft copolymer and an aromatic vinyl copolymer resin; about 10 by weight of to about 50 parts by weight of a flame retardant excluding phosphorus compounds; about 1.5 by weight of to about 3.5 parts by weight of a zinc oxide having an average particle size of about 0.2 $\mu$m to about 3 $\mu$m and a BET specific surface area of about 1 m$^2$/g to about 10 m$^2$/g; and about 2.5 by weight of to about 6.5 parts by weight of a sodium phosphate.

2. In Embodiment 1, the rubber-modified vinyl graft copolymer may be prepared by graft polymerization of a monomer mixture comprising an aromatic vinyl monomer and a vinyl cyanide monomer to a rubber polymer.

3. In Embodiments 1 to 2, the aromatic vinyl copolymer resin may be a polymer of an aromatic vinyl monomer and a monomer copolymerizable with the aromatic vinyl monomer.

4. In Embodiments 1 to 3, the rubber-modified vinyl graft copolymer may be present in an amount of about 20 wt% to about 50 wt%, based on the total weight 100 wt% of the thermoplastic resin and the aromatic vinyl copolymer resin may be present in an amount of about 50 wt% to about 80 wt%, based on the total weight 100 wt% of the thermoplastic resin.

5. In Embodiments 1 to 4, the flame retardant may include halogen-based flame retardants and antimony-based flame retardants.

6. In Embodiments 1 to 5, the zinc oxide may have a peak intensity ratio (B/A) of about 0.01 to about 1, where A indicates a peak in the wavelength range of 370 nm to 390 nm and B indicates a peak in the wavelength range of 450 nm to 600 nm in photoluminescence measurement.

7. In Embodiments 1 to 6, the zinc oxide has a peak position (2θ) in the range of 35° to 37° and a crystallite size of about 1,000 Å to about 2,000 Å, in X-ray diffraction (XRD) analysis, as calculated by Equation 1:

[Equation 1]

$$\text{Crystallite size (D)} = \frac{K\lambda}{\beta\cos\theta}$$

where K is a shape factor, λ is an X-ray wavelength, β is an FWHM value (degree) of an X-ray diffraction peak, and θ is a peak position degree.

8. In Embodiments 1 to 7, a weight ratio of the flame retardant to the zinc oxide may range from about 10 : 1 to about 15 : 1.

9. In Embodiments 1 to 8, a weight ratio of the zinc oxide to the sodium phosphate may range from about 1 : 1.7 to about 1 : 2.3.

10. In Embodiments 1 to 9, the thermoplastic resin composition may have an antibacterial activity of about 2 to about 7 against each of *Staphylococcus aureus* and *Escherichia coli,* as measured on a 5 cm × 5 cm specimen in accordance with JIS Z 2801 after the specimen is subjected to inoculation with each of *Staphylococcus aureus* and *Escherichia coli,* followed by culturing under conditions of 35°C and 90% RH for 24 hours.

11. In Embodiments 1 to 10, the thermoplastic resin composition may have a flame retardancy of V-0 or higher, as measured on a 2 mm thick specimen in accordance with UL-94 vertical test.

12. In Embodiments 1 to 10, the thermoplastic resin composition may have a notched Izod impact strength of about 8 kgf·cm/cm to about 30 kgf·cm/cm, as measured on a 1/8" thick specimen in accordance with ASTM D256.

13. Another aspect of the present invention relates to a molded article. The molded article may be formed of the thermoplastic resin composition according to any one of Embodiments 1 to 12.

[Advantageous Effects]

The present invention provides a thermoplastic resin composition having good properties in terms of antibacterial properties, flame retardancy, impact resistance, and the like and a molded article formed of the same.

[Best Mode]

Hereinafter, embodiments of the present invention will be described in detail.

A thermoplastic resin composition according to the present invention comprises (A) a thermoplastic resin including (A1) a rubber-modified vinyl graft copolymer and (A2) an aromatic vinyl copolymer resin; (B) a flame retardant excluding phosphorus compounds; (C) a zinc oxide; and (D) a sodium phosphate.

(A) Thermoplastic resin

The thermoplastic resin of the present invention may be a rubber-modified vinyl copolymer resin including the (A1) rubber-modified vinyl graft copolymer and the (A2) aromatic vinyl copolymer resin.

(A1) Rubber-modified vinyl graft copolymer

According to an embodiment of the invention, the rubber-modified vinyl graft copolymer may be obtained by graft polymerization of a monomer mixture including an aromatic vinyl monomer and a vinyl cyanide monomer to a rubber polymer. For example, the rubber-modified vinyl graft copolymer may be obtained by graft polymerization of the monomer mixture including the aromatic vinyl monomer and the vinyl cyanide monomer to the rubber polymer, in which the monomer mixture may further include a monomer for imparting processability and heat resistance, as needed. Here, polymerization may be performed by any typical polymerization method, such as emulsion polymerization, suspension polymerization, and the like. In addition, the rubber-modified vinyl graft copolymer may form a core (rubber polymer)-shell (copolymer of the monomer mixture) structure, without being limited thereto.

In some embodiments, the rubber polymer may include diene rubbers, such as polybutadiene, poly(styrene-butadiene), and poly(acrylonitrile-butadiene); saturated rubbers obtained by adding hydrogen to the diene rubbers; isoprene rubbers; C2 to C10 alkyl (meth)acrylate rubbers, a copolymer of a C2 to C10 alkyl (meth)acrylate and styrene; and a terpolymer of ethylene-propylene-diene monomers (EPDM), etc. These may be used alone or as a mixture thereof. For example, the rubber polymer may include diene rubbers and (meth)acrylate rubbers. Specifically, the rubber polymer may include butadiene rubber and butyl acrylate rubber. The rubber polymer (rubber particle) may have an average particle diameter (Z-average) of about 0.05 μm to about 6 μm, for example, about 0.15 μm to about 4 μm, specifically about 0.25 μm to about 3.5 μm. Within this range, the thermoplastic resin composition may have good properties in terms of impact resistance, external appearance, and the like. Here, the average particle diameter (z-average) of the rubber polymer (rubber particle) can be measured using a light scattering method in a latex state. Specifically, the rubbery polymer latex is filtered through a mesh to remove coagulum generated during the polymerization of rubbery polymer, and a solution of 0.5 g of latex and 30 ml of distilled water is poured into a 1,000 ml flask and filled with distilled water to prepare a sample. Then, 10 ml of a sample is transferred to a quartz cell, and the average particle diameter of the rubbery polymer can be measured with a light scattering particle size analyzer (manufactured by Malvern, Model name: nano-zs).

In some embodiments, based on 100 wt% of the rubber-modified vinyl graft copolymer, the rubber polymer may be present in an amount of about 20 wt% to about 70 wt%, for example, about 25 wt% to about 60 wt%, and the monomer mixture (including the aromatic vinyl monomer and the vinyl cyanide monomer) may be present in an amount of about 30 wt% to about 80 wt%, for example, about 40 wt% to about 75 wt%. Within this range, the thermoplastic resin composition may have good properties in terms of impact resistance, external appearance, and the like.

In some embodiments, the aromatic vinyl monomer is a monomer graft-copolymerizable with the rubber copolymer and may include, for example, styrene, α-methylstyrene, β-methylstyrene, p-methylstyrene, p-t-butylstyrene, ethylstyrene, vinylxylene, monochlorostyrene, dichlorostyrene, dibromostyrene, and vinyl naphthalene, without being limited thereto. These may be used alone or as a mixture thereof. The aromatic vinyl monomer may be present in an amount of about 10 wt% to about 90 wt%, for example, about 40 wt% to about 90 wt%, based on 100 wt% of the monomer mixture. Within this range, the thermoplastic resin composition may have good properties in terms of processability, impact resistance, and the like.

In some embodiments, the vinyl cyanide monomer is copolymerizable with the aromatic vinyl monomer, and may include, for example, acrylonitrile, methacrylonitrile, ethacrylonitrile, phenyl acrylonitrile, α-chloroacrylonitrile, fumaronitrile, and the like. These may be used alone or as a mixture thereof. For example, the vinyl cyanide monomer may be acrylonitrile and methacrylonitrile. The vinyl cyanide monomer may be present in an amount of about 10 wt% to about 90 wt%, for example, about 10 wt% to about 60 wt%, based on 100 wt% of the monomer mixture. Within this range, the thermoplastic resin composition may have good properties in terms of chemical resistance, mechanical properties, and the like.

Examples of the monomer for imparting processability and heat resistance may include (meth)acrylic acid, maleic anhydride, and N-substituted maleimide, without being limited thereto. The monomer for imparting processability and heat resistance may be present in an amount of about 15 wt% or less, for example, about 0.1 wt% to about 10 wt%, based on 100 wt% of the monomer mixture. Within this range, the thermoplastic resin composition may obtain processability and heat resistance without deterioration in other properties.

Examples of the rubber-modified vinyl graft copolymer may include a g-ABS copolymer obtained by grafting a styrene monomer (as the aromatic vinyl compound) and an acrylonitrile monomer (as the vinyl cyanide compound) to a butadiene-based rubber polymer, an acrylate-styrene-acrylate (g-ASA) copolymer obtained by grafting a styrene monomer (as the aromatic vinyl compound) and an acrylonitrile monomer (as the vinyl cyanide compound) to a butyl acrylate-based rubber polymer, and the like.

In some embodiments, the rubber-modified vinyl graft copolymer may be present in an amount of about 20 wt% to about 50 wt%, for example, about 25 wt% to about 45 wt%, based on 100 wt% of the thermoplastic resin (including the rubber-modified vinyl graft copolymer and the aromatic vinyl copolymer resin). Within this range, the thermoplastic resin composition can exhibit good properties in terms of impact resistance, fluidity (molding processability), external appearance, and balance therebetween.

(A2) Aromatic vinyl copolymer resin

According to the embodiment of the invention, the aromatic vinyl copolymer resin may be an aromatic vinyl copolymer resin used for a typical rubber-modified vinyl graft copolymer resin. For example, the aromatic vinyl copolymer resin may be a polymer of a monomer mixture including an aromatic vinyl monomer and a monomer copolymerizable with the aromatic vinyl monomer.

In some embodiments, the aromatic vinyl copolymer resin may be prepared by mixing the aromatic vinyl monomer and the monomer copolymerizable with the aromatic vinyl monomer, followed by polymerization. Here, polymerization may be carried out by any well-known polymerization method, such as emulsion polymerization, suspension polymerization, bulk polymerization, and the like.

Examples of the aromatic vinyl monomer may include styrene, α-methylstyrene, β-methylstyrene, p-methylstyrene, p-t-butylstyrene, ethylstyrene, vinylxylene, monochlorostyrene, dichlorostyrene, dibromostyrene, and vinyl naphthalene. These may be used alone or as a mixture thereof. The aromatic vinyl monomer may be present in an amount of about 20 wt% to about 90 wt%, for example, about 30 wt% to about 80 wt%, based on 100 wt% of the aromatic vinyl copolymer resin. Within this range, the thermoplastic resin composition can exhibit good properties in terms of impact resistance, fluidity, and the like.

In some embodiments, the monomer copolymerizable with the aromatic vinyl monomer may include at least one of a vinyl cyanide monomer and an alkyl(meth)acrylate. For example, vinyl cyanide monomer or a mixture of vinyl cyanide monomer and alkyl(meth)acrylate, specifically, vinyl cyanide monomer can be used.

In some embodiments, examples of the vinyl cyanide monomer may include acrylonitrile, methacrylonitrile, ethacrylonitrile, phenylacrylonitrile, α-chloroacrylonitrile, and fumaronitrile, without being limited thereto. These may be used alone or as a mixture thereof. For example, acrylonitrile, methacrylonitrile, and the like can be used.

In some embodiments, examples of the alkyl (meth)acrylate may include (meth)acrylic acid and /or C1 to C10 alkyl (meth)acrylate, and the like. These may be used alone or as a mixture thereof. For example, methyl methacrylate, methyl acrylate, and the like can be used.

In some embodiments, when the monomer copolymerizable with the aromatic vinyl monomer is a mixture of vinyl cyanide monomer and alkyl (meth)acrylate monomer, the vinyl cyanide monomer may be present in an amount of about 1 wt% to about 40 wt%, for example, about 2 wt% to about 35 wt%, based on 100 wt% of the monomer copolymerizable with the aromatic vinyl monomer and the alkyl (meth)acrylate monomer may be present in an amount of about 60 wt% to about 99 wt%, for example, about 65 wt% to about 98 wt%, based on 100 wt% of the monomer copolymerizable with the aromatic vinyl monomer. Within this range, the thermoplastic resin composition may have good properties in terms of transparency, heat resistance, processability and the like.

The monomer copolymerizable with the aromatic vinyl monomer may be present in an amount of about 10 wt% to about 80 wt%, for example, about 20 wt% to about 70 wt%, based on 100 wt% of the aromatic vinyl copolymer resin. Within this range, the thermoplastic resin composition can exhibit good properties in terms of impact resistance, fluidity, and the like.

In some embodiments, the aromatic vinyl copolymer resin may have a weight average molecular weight (Mw) of about 10,000 g/mol to about 300,000 g/mol, for example, about 15,000 g/mol to about 150,000 g/mol, as measured by gel permeation chromatography (GPC). Within this range, the thermoplastic resin exhibits good properties in terms of mechanical strength, formability, and the like.

In some embodiments, the aromatic vinyl copolymer resin may be present in an amount of about 50 wt% to about 80 wt%, for example, about 55 wt% to about 75 wt%, based on 100 wt% of the thermoplastic resin. Within this range, the thermoplastic resin composition can exhibit good properties in terms of impact resistance, fluidity (molding processability), and the like.

(B) Flame retardant excluding phosphorus compounds

According to the embodiment of the invention, the flame retardant serves to improve flame retardancy and antibacterial properties of the thermoplastic resin composition together with a combination of zinc oxide and sodium phosphate, and may include a flame retardant excluding phosphorus compounds, such as halogen-based flame retardants and antimony-based flame retardants.

In some embodiments, examples of the halogen-based flame retardants may include decabromodiphenyl oxide, decabromodiphenyl ethane, decabromodiphenyl ether, tetrabromobisphenol A, tetrabromobisphenol A-epoxy oligomer, brominated epoxy oligomer, octabromo trimethyl phenylindan, ethylenebis(tetrabromo phthalimide), 2,4,6-tris(2,4,6-tribromophenoxy)-1,3,5-triazine, and the like. Examples of the antimony-based flame retardants may include antimony trioxide, antimony pentoxide and the like. These can be used alone or in combination of two or more.

In some embodiments, the halogen-based flame retardants and the antimony-based flame retardants may be present in a weight ratio (halogen-based flame retardants : antimony-based flame retardants) of about 2 : 1 to about 6 : 1, for example, about 3 : 1 to about 5 : 1. Within this range, the thermoplastic resin composition may achieve good flame retardancy even with a small amount of flame retardant.

In some embodiments, the flame retardant may be present in an amount of about 10 parts by weight to about 50 parts by weight, for example, about 15 parts by weight to about 40 parts by weight, specifically, about 20 parts by weight to about 35 parts by weight, relative to about 100 parts by weight of the thermoplastic resin. If the amount of the flame retardant is less than 10 parts by weight, the thermoplastic resin composition can suffer from deterioration in flame retardancy, etc. If the amount of the flame retardant is more than 50 parts by weight, antibacterial properties or balance of other properties of the thermoplastic resin composition could be deteriorated.

(C) Zinc oxide

According to the present invention, the zinc oxide serves to improve antibacterial properties, flame retardancy, weather resistance (UV resistance) and impact resistance of the thermoplastic resin composition together with the flame retardant and the sodium phosphate. The zinc oxide may have an average particle diameter (D50) of primary particles (not forming a secondary particle through agglomeration of particles) of about 0.2 $\mu$m to about 3 $\mu$m, for example, about 0.5 $\mu$m to about 3 $\mu$m, as measured using a particle size analyzer (Laser Diffraction Particle Size Analyzer LS 13 320, Beckman Coulter Co., Ltd.) Further, the zinc oxide may have a BET specific surface area of about 1 m$^2$/g to about 10 m$^2$/g, for example, about 1 m$^2$/g to about 7 m$^2$/g, as measured by a nitrogen gas adsorption method using a BET analyzer (Surface Area and Porosity Analyzer ASAP 2020, Micromeritics Co., Ltd.) and may have a purity of about 99% or higher. If these parameters of the zinc oxide are outside these ranges, the thermoplastic resin composition may have poor properties in terms of weather resistance and antibacterial properties.

In some embodiments, the zinc oxide may have various shape, for example, a spherical shape, a plate shape, a rod shape, a combination thereof, and the like.

In some embodiments, the zinc oxide may have a peak intensity ratio (B/A) of about 0.01 to about 1, for example, about 0.1 to about 1.0, specifically about 0.1 to about 0.5, where A indicates a peak in the wavelength range of 370 nm to 390 nm and B indicates a peak in the wavelength range of 450 nm to 600 nm in photoluminescence measurement. Within this range, the thermoplastic resin composition may have good properties in terms of weather resistance, antibacterial properties, impact resistance and the like.

In one embodiment, the zinc oxide may have a peak position degree ($2\theta$) in the range of 35° to 37° and a crystallite size of about 1,000 Å to about 2,000 Å, for example, about 1,200 to about 1,800 Å in analysis of X-ray diffraction (XRD), as calculated by Scherrer's Equation (Equation 1) with reference to a measured FWHM value (full width at half maximum of a diffraction peak). Within this range, the thermoplastic resin composition may have good properties in terms of initial color, weather resistance, antibacterial properties, and the like.

[Equation 1]

$$\text{Crystallite size (D)} = \frac{K\lambda}{\beta\cos\theta}$$

where K is a shape factor, $\lambda$ is an X-ray wavelength, $\beta$ is an FWHM value (degree), and $\theta$ is a peak position degree.

In some embodiments, the zinc oxide may be prepared by melting metallic zinc in a reactor, heating the molten zinc to about 850°C to about 1,000°C, for example, about 900°C to about 950°C, to vaporize the molten zinc, injecting oxygen gas into the reactor, cooling the reactor to about 20°C to about 30°C, followed by heating the reactor to about 400°C to about 900°C, for example about 500 to about 800°C for about 30 minutes to about 150 minutes, for example, about 60 minutes to about 120 minutes.

In some embodiments, the zinc oxide may be present in an amount of about 1.5 parts by weight to about 3.5 parts by weight, for example, about 2 parts by weight to about 3 parts by weight, relative to about 100 parts by weight of the thermoplastic resin. If the amount of the zinc oxide is less than 1.5 parts by weight, the thermoplastic resin composition can suffer from deterioration in antibacterial properties. If the amount of the zinc oxide is more than 3.5 parts by weight, flame retardancy or balance of other properties of the thermoplastic resin composition could be deteriorated.

In some embodiments, the flame retardant and the zinc oxide may be present in a weight ratio (flame retardant : zinc oxide) of about 10 : 1 to about 15 : 1, for example, about 11.4 : 1 to about 14.3 : 1. Within this range, the thermoplastic resin composition may have further improved properties in terms of antibacterial properties and flame retardancy.

(D) Sodium phosphate

The sodium phosphate can serve to improve both antibacterial properties and flame retardancy of the thermoplastic resin composition together with the flame retardant and the zinc oxide, and any commercially available sodium phosphate can be used.

In some embodiments, the sodium phosphate may be monosodium phosphate ($NaH_2PO_4$).

In some embodiments, the sodium phosphate may be present in an amount of about 2.5 parts by weight to about 6.5 parts by weight, for example, about 3.5 parts by weight to about 5.5 parts by weight, relative to about 100 parts by weight of the thermoplastic resin. If the amount of the sodium phosphate is less than 2.5 parts by weight, the thermoplastic resin composition can suffer from deterioration in flame retardancy, etc. If the amount of the sodium phosphate is more than 6.5 parts by weight, balance of other properties of the thermoplastic resin composition could be deteriorated.

In some embodiments, the zinc oxide and the sodium phosphate may be present in a weight ratio (zinc oxide : sodium phosphate) of about 1 : 1.7 to about 1 : 2.3, for example, about 1 : 1.75 to about 1 : 2.25. Within this range, the thermoplastic resin composition may have further improved properties in terms of flame retardancy, antibacterial properties and balance therebetween.

In one embodiment, the thermoplastic resin composition may further include any typical additive included in thermoplastic resin compositions. Examples of the additive may include a flame retardant, fillers, an antioxidant, an anti-dripping agent, a lubricant, a release agent, a nucleating agent, an antistatic agent, a pigment, a dye, and combinations thereof, without being limited thereto. The additives may be present in an amount of about 0.001 parts by weight to about 40 parts by weight, for example, about 0.1 to about 10 parts by weight, relative to about 100 parts by weight of the thermoplastic resin.

In one embodiment, the thermoplastic resin composition may be prepared in pellet form by mixing the aforementioned components, followed by melt extrusion using a typical twin-screw extruder at about 170°C to about 250°C, for example, about 190°C to about 230°C.

In some embodiments, the thermoplastic resin composition may have an antibacterial activity of about 2 to about 7, for example, about 2.2 to about 5 against each of *Staphylococcus aureus* and *Escherichia coli,* as measured on 5 cm×5 cm specimens in accordance with JIS Z 2801 after inoculation with *Staphylococcus aureus* and *Escherichia coli,* respectively, followed by culturing under conditions of 35±1 °C and 90% RH for 24 hours.

In some embodiments, the thermoplastic resin composition may have a flame retardancy of V-0 or higher, as measured on a 2 mm thick specimen in accordance with UL-94 vertical test.

In some embodiments, the thermoplastic resin composition may have a notched Izod impact strength of about 8 kgf·cm/cm to about 30 kgf·cm/cm, as measured on a 1/8" thick specimen in accordance with ASTM D256.

A molded article according to the present invention is formed of the thermoplastic resin composition set forth above. The thermoplastic resin composition may be prepared in pellet form and the prepared pellets may be produced into various molded articles (products) by various molding methods, such as injection molding, extrusion, vacuum molding, and casting. Such molding methods are well known to those skilled in the art. The molded articles may exhibit good properties in terms of antibacterial properties, flame retardancy, impact resistance, and balance therebetween, and thus may be used in various fields, such as interior/exterior materials for electric/electronic products, and the like.

[Mode for Invention]

Next, the present invention will be described in more detail with reference to some examples. It should be understood that these examples are provided for illustration only and are not to be in any way construed as limiting the present invention.

**EXAMPLE**

Details of components used in Examples and Comparative Examples are as follows:

(A) Thermoplastic resin

A rubber-modified vinyl copolymer resin comprising 28 wt% of (A1) rubber-modified vinyl graft copolymer and 72 wt% of (A2) aromatic vinyl copolymer resin was used.

(A1) Rubber-modified vinyl graft copolymer

A g-ABS copolymer obtained by grafting 42 wt% of a mixture comprising styrene and acrylonitrile (weight ratio: 75/25) to 58 wt% of butadiene rubber having a Z-average particle diameter of 264 nm was used.

(A2) Aromatic vinyl copolymer resin

A SAN resin (weight average molecular weight: 142,500 g/mol) prepared by polymerizing 74.3 wt% of styrene and 25.7 wt% of acrylonitrile was used.

(B) Flame retardant

(B1) brominated epoxy oligomer (Manufacturer: Kukdo Chemical Co. Ltd, product name: YDB-406) was used.
(B2) antimony trioxide (Manufacturer: Ilsung Antimony Co.,Ltd., product name: ANTIS W) was used.

(C) Zinc oxide

(C1) Metallic zinc was melted in a reactor, followed by heating to 900°C to vaporize the molten zinc, and then oxygen gas was injected into the reactor, followed by cooling to room temperature (25°C) to obtain an intermediate. Then, the intermediate was subjected to heat treatment at 700°C for 90 minutes, followed by cooling to room temperature (25°C), thereby preparing zinc oxide (C1).
(C2) Zinc oxide (Manufacturer: Ristecbiz Co., Ltd., product name: RZ-950) was used.
(C3) Zinc oxide (Manufacturer: Hanil Chemical Co., Ltd., product name: TE30) was used.

Average particle diameter, BET surface area, purity, peak intensity ratio (B/A) of peak B in the wavelength range of 450 nm to 600 nm to peak A in the wavelength range of 370 nm to 390 nm in photoluminescence measurement, and crystallite size of the zinc oxides (C1), (C2) and (C3) are shown in Table 1.

(D) Phosphorus compound

(D1) sodium phosphate(Manufacturer: Youngjin Chemicals, product name: Monosodium Phosphate) was used.
(D2) bisphenol-A diphosphate(Manufacturer: DAIHACHI, product name: CR-741) was used as a phosphorus flame retardant.

Table 1

|  | (C1) | (C2) | (C3) |
|---|---|---|---|
| Average particle diameter ($\mu$m) | 1.2 | 0.890 | 3.7 |
| BET surface area (m$^2$/g) | 4 | 15 | 14 |
| Purity (%) | 99 | 97 | 97 |
| PL peak intensity ratio (B/A) | 0.28 | 9.8 | 9.5 |
| Crystallite size (Å) | 1,417 | 503 | 489 |

Property evaluation

(1) Average particle size (unit: $\mu$m): Average particle size(volume average) was measured using a particle size analyzer (Laser Diffraction Particle size analyzer LS 13 320, Beckman Coulter Co., Ltd.).
(2) BET surface area (unit: m$^2$/g): BET surface area was measured by a nitrogen gas adsorption method.
(3) Purity (unit: %): Purity was measured by thermo-gravimetric analysis (TGA) based on the weight of the remaining material at 800°C.
(4) PL peak intensity ratio (B/A): Spectrum emitted upon irradiation of a specimen using a He-Cd laser (KIMMON, 30 mW) at a wavelength of 325 nm at room temperature was detected by a CCD detector in a photoluminescence measurement method, in which the CCD detector was maintained at -70°C. A peak intensity ratio (B/A) of peak B in the wavelength range of 450 nm to 600 nm to peak A in the wavelength range of 370 nm to 390 nm was measured. Here, an injection molded specimen was irradiated with laser beams without separate treatment upon PL analysis and zinc oxide powder was compressed in a pelletizer having a diameter of 6 mm to prepare a flat specimen.
(5) Crystallite size (unit: Å): Crystallite size was measured using a high-resolution X-ray diffractometer (PRO-MRD, X'pert Co., Ltd.) at a peak position degree (2θ) in the range of 35° to 37° and calculated by Scherrer's Equation (Equation 1) with reference to a measured FWHM value (full width at half maximum of a diffraction peak). Here, both a specimen in powder form and an injection molded specimen could be used, and for more accurate analysis, the injection molded specimen was subjected to heat treatment at 600°C in air for 2 hours to remove a polymer resin before XRD analysis.

[Equation 1]

$$\text{Crystallite size (D)} = \frac{K\lambda}{\beta\cos\theta}$$

where K is a shape factor, λ is an X-ray wavelength, β is an FWHM value (degree), and θ is a peak position degree.

**Examples 1 to 6 and Comparative Examples 1 to 8**

The aforementioned components were mixed in amounts as listed in Tables 2 and 3, followed by extrusion at 230°C, thereby preparing a thermoplastic resin composition in pellet form. Here, extrusion was performed using a twin-screw extruder (L/D: 36, Φ: 45 mm). The prepared pellets were dried at 80°C for 2 hours or more and then subjected to injection molding using a 6 oz. injection machine (molding temperature: 230°C, mold temperature: 60°C), thereby preparing a specimen. The prepared specimen was evaluated as to the following properties. Results are shown in Tables 2 and 3.

Property Evaluation

(1) Antibacterial activity: Antibacterial activity was measured on a 5 cm×5 cm specimen obtained by inoculation with each of Staphylococcus aureus and Escherichia coli, followed by culturing under conditions of 35°C and 90% RH for 24 hours, in accordance with JIS Z 2801.
(2) Flame retardancy: Flame retardancy of a 2 mm thick specimen was measured by the UL-94 vertical test method.
(3) Impact resistance (kgf·cm/cm): Izod impact strength was measured on a 1/8" thick specimen in accordance with ASTM D256.

Table 2

|  | Example | | | | | |
|---|---|---|---|---|---|---|
|  | 1 | 2 | 3 | 4 | 5 | 6 |
| (A) (parts by weight) | 100 | 100 | 100 | 100 | 100 | 100 |
| (B1) (parts by weight) | 23 | 23 | 23 | 23 | 23 | 23 |
| (B2) (parts by weight) | 5.5 | 5.5 | 5.5 | 5.5 | 5.5 | 5.5 |
| (C1) (parts by weight) | 2 | 2 | 2 | 2.5 | 2.5 | 2.5 |
| (C2) (parts by weight) | - | - | - | - | - | - |
| (C3) (parts by weight) | - | - | - | - | - | - |
| (D1) (parts by weight) | 3.5 | 4 | 4.5 | 4.5 | 5.0 | 5.5 |
| (D2) (parts by weight) | - | - | - | - | - |  |
| Antibacterial activity (Escherichia coli) | 2.6 | 2.5 | 2.2 | 2.5 | 2.4 | 2.7 |
| Antibacterial activity (Staphylococcus aureus) | 4.2 | 4.6 | 4.1 | 4.9 | 4.4 | 4.7 |
| Flame retardancy | V-0 | V-0 | V-0 | V-0 | V-0 | V-0 |
| Notched Izod impact strength | 10.8 | 10.5 | 9.9 | 9.1 | 8.7 | 8.1 |

Table 3

| | Comparative Example | | | | | | | |
|---|---|---|---|---|---|---|---|---|
| | 1 | 2 | 3 | 4 | 5 | 6 | 7 | 8 |
| (A) (parts by weight) | 100 | 100 | 100 | 100 | 100 | 100 | 100 | 100 |
| (B1) (parts by weight) | 23 | 23 | 23 | 23 | 23 | 23 | 23 | - |
| (B2) (parts by weight) | 5.5 | 5.5 | 5.5 | 5.5 | 5.5 | 5.5 | 5.5 | - |
| (C1) (parts by weight) | 1 | 4 | 2 | 2 | - | - | 2 | 2 |
| (C2) (parts by weight) | - | - | - | - | 2 | - | - | - |
| (C3) (parts by weight) | - | - | - | - | - | 2 | - | - |
| (D1) (parts by weight) | 4.5 | 4.5 | 2 | 7 | 4.5 | 4.5 | - | 4.5 |
| (D2) (parts by weight) | - | - | - | - | - | - | 4.5 | 28.5 |
| Antibacterial activity (*Escherichia coli*) | 1.9 | 4.6 | 4.5 | 4.3 | 1.1 | 0.7 | 4.5 | 4.8 |
| Antibacterial activity (*Staphylococcus aureus*) | 1.5 | 2.5 | 2.7 | 2.3 | 0.6 | 0.3 | 2.5 | 2.4 |
| Flame retardancy | V-0 | FAIL | FAIL | V-0 | V-0 | V-0 | FAIL | FAIL |
| Notched Izod impact strength | 11.9 | 6.1 | 12.4 | 7.2 | 8.3 | 9.6 | 8.2 | 5.7 |

From the above results, it can be seen that the thermoplastic resin composition according to the present invention had good properties in terms of antibacterial properties, flame retardancy, impact properties and the like.

In contrast, it could be seen that the composition of Comparative Example 1 prepared using a small amount of the zinc oxide suffered from deterioration in antibacterial properties; the composition of Comparative Example 2 prepared using an excess of the zinc oxide suffered from deterioration in flame retardancy and impact resistance; the composition of Comparative Example 3 prepared using a small amount of sodium phosphate suffered from significant deterioration in flame retardancy; and the composition of Comparative Example 4 prepared using an excess of sodium phosphate suffered from deterioration in impact resistance. In addition, it could be seen that the compositions of Comparative Examples 5 and 6 prepared using zinc oxide (C2) and zinc oxide (C3) respectively, instead of zinc oxide (C1) of the present invention suffered from deterioration in antibacterial properties, the composition of Comparative Example 7 prepared using aromatic phosphorus compound (D2) instead of sodium phosphate(D1) of the present invention suffered from deterioration in flame retardancy; and the composition of Comparative Example 8 prepared using aromatic phosphorus compound (D2) instead of flame retardants (B1) and (B2) of the present invention suffered from significant deterioration in flame retardancy and impact resistance.

It should be understood that various modifications, changes, alterations, and equivalent embodiments can be made by those skilled in the art without departing from the spirit and scope of the invention.

**Claims**

1. A thermoplastic resin composition comprising:

   about 100 parts by weight of a thermoplastic resin comprising a rubber-modified vinyl graft copolymer and an aromatic vinyl copolymer resin;
   about 10 parts by weight to about 50 parts by weight of a flame retardant excluding phosphorus compounds;
   about 1.5 parts by weight to about 3.5 parts by weight of a zinc oxide having an average particle size of about 0.2 $\mu$m to about 3 $\mu$m and a BET specific surface area of about 1 $m^2$/g to about 10 $m^2$/g; and
   about 2.5 parts by weight to about 6.5 parts by weight of a sodium phosphate.

2. The thermoplastic resin composition according to claim 1, wherein the rubber-modified vinyl graft copolymer is prepared by graft polymerization of a monomer mixture comprising an aromatic vinyl monomer and a vinyl cyanide monomer to a rubber polymer.

3. The thermoplastic resin composition according to claim 1 or claim 2, wherein the aromatic vinyl copolymer resin is a polymer of an aromatic vinyl monomer and a monomer copolymerizable with the aromatic vinyl monomer.

4. The thermoplastic resin composition according to any one of claims 1 to 3, wherein the rubber-modified vinyl graft copolymer is present in an amount of about 20 wt% to about 50 wt%, based on the total weight 100 wt% of the thermoplastic resin and the aromatic vinyl copolymer resin is present in an amount of about 50 wt% to about 80 wt%, based on the total weight 100 wt% of the thermoplastic resin.

5. The thermoplastic resin composition according to any one of claims 1 to 4, wherein the flame retardant includes halogen-based flame retardants and antimony-based flame retardants.

6. The thermoplastic resin composition according to any one of claims 1 to 5, wherein the zinc oxide has a peak intensity ratio (B/A) of about 0.01 to about 1, where A indicates a peak in the wavelength range of 370 nm to 390 nm and B indicates a peak in the wavelength range of 450 nm to 600 nm in photoluminescence measurement.

7. The thermoplastic resin composition according to any one of claims 1 to 6, wherein the zinc oxide has a peak position (2θ) in the range of 35° to 37° and a crystallite size of about 1,000 Å to about 2,000 Å, in X-ray diffraction (XRD) analysis, as calculated by Equation 1:

[Equation 1]

$$\text{Crystallite size (D)} = \frac{K\lambda}{\beta \cos\theta}$$

where K is a shape factor, λ is an X-ray wavelength, β is an FWHM value (degree) of an X-ray diffraction peak, and θ is a peak position degree.

8. The thermoplastic resin composition according to any one of claims 1 to 7, wherein a weight ratio of the flame retardant to the zinc oxide ranges from about 10 : 1 to about 15 : 1.

9. The thermoplastic resin composition according to any one of claims 1 to 8, wherein a weight ratio of the zinc oxide to the sodium phosphate ranges from about 1 : 1.7 to about 1 : 2.3.

10. The thermoplastic resin composition according to any one of claims 1 to 9, wherein the thermoplastic resin composition has an antibacterial activity of about 2 to about 7 against each of *Staphylococcus aureus* and *Escherichia coli,* as measured on a 5 cm×5 cm specimen in accordance with JIS Z 2801 after the specimen is subjected to inoculation with each of *Staphylococcus aureus* and *Escherichia coli,* followed by culturing under conditions of 35°C and 90% RH for 24 hours.

11. The thermoplastic resin composition according to any one of claims 1 to 10, wherein the thermoplastic resin composition has a flame retardancy of V-0 or higher, as measured on a 2 mm thick specimen in accordance with UL-94 vertical test.

12. The thermoplastic resin composition according to any one of claims 1 to 11, wherein the thermoplastic resin composition has a notched Izod impact strength of about 8 kgf·cm/cm to about 30 kgf·cm/cm, as measured on a 1/8" thick specimen in accordance with ASTM D256.

13. A molded article formed of the thermoplastic resin composition according to any one of claims 1 to 12.

# EP 3 904 448 A1

| INTERNATIONAL SEARCH REPORT | International application No. |
|---|---|
| | **PCT/KR2019/017314** |

**A. CLASSIFICATION OF SUBJECT MATTER**

*C08L 25/08(2006.01)i, C08L 55/02(2006.01)i, C08K 3/016(2018.01)i, C08K 5/00(2006.01)i, C08K 3/32(2006.01)i, C08K 3/22(2006.01)i*

According to International Patent Classification (IPC) or to both national classification and IPC

**B. FIELDS SEARCHED**

Minimum documentation searched (classification system followed by classification symbols)

C08L 25/08; C08K 3/08; C08K 3/22; C08K 5/521; C08K 7/06; C08L 51/04; C08L 53/02; C08L 69/00; C08L 55/02; C08K 3/016; C08K 5/00; C08K 3/32

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: thermoplastic resin, ABS, SAN, flame retardant, zinc oxide, sodium phosphate

**C. DOCUMENTS CONSIDERED TO BE RELEVANT**

| Category* | Citation of document, with indication, where appropriate, of the relevant passages | Relevant to claim No. |
|---|---|---|
| Y | KR 10-2018-0078901 A (LOTTE ADVANCED MATERIALS CO., LTD.) 10 July 2018<br>See paragraph [0081]; claims 1-4. | 1-3 |
| Y | JP 2002-069287 A (TECHNO POLYMER CO., LTD.) 08 March 2002<br>See paragraphs [0026], [0028], [0044]. | 1-3 |
| A | JP 2005-239904 A (TECHNO POLYMER CO., LTD.) 08 September 2005<br>See paragraphs [0042], [0044], [0045]; claims 1, 5-7. | 1-3 |
| A | JP 2001-055499 A (MITSUBISHI RAYON CO., LTD.) 27 February 2001<br>See paragraphs [0031], [0032]; claims 1-3. | 1-3 |
| A | KR 10-2018-0045777 A (LOTTE ADVANCED MATERIALS CO., LTD.) 04 May 2018<br>See paragraphs [0076], [0080], [0106]-[0108]. | 1-3 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 MARCH 2020 (13.03.2020) | **16 MARCH 2020 (16.03.2020)** |

| Name and mailing address of the ISA/KR | Authorized officer |
|---|---|
| Korean Intellectual Property Office<br>Government Complex Daejeon Building 4, 189, Cheongsa-ro, Seo-gu, Daejeon, 35208, Republic of Korea<br>Facsimile No. +82-42-481-8578 | Telephone No. |

Form PCT/ISA/210 (second sheet) (January 2015)

12

## INTERNATIONAL SEARCH REPORT

| International application No. |
|---|
| **PCT/KR2019/017314** |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☒ Claims Nos.: **4-13**
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**
Information on patent family members

International application No.

**PCT/KR2019/017314**

| Patent document cited in search report | Publication date | Patent family member | Publication date |
|---|---|---|---|
| KR 10-2018-0078901 A | 10/07/2018 | CN 110114403 A | 09/08/2019 |
| | | EP 3564308 A1 | 06/11/2019 |
| | | JP 2020-504197 A | 06/02/2020 |
| | | KR 10-1945603 B1 | 07/02/2019 |
| | | US 2019-0309156 A1 | 10/10/2019 |
| | | WO 2018-124592 A1 | 05/07/2018 |
| JP 2002-069287 A | 08/03/2002 | JP 4916623 B2 | 18/04/2012 |
| | | US 2002-0022686 A1 | 21/02/2002 |
| JP 2005-239904 A | 08/09/2005 | None | |
| JP 2001-055499 A | 27/02/2001 | None | |
| KR 10-2018-0045777 A | 04/05/2018 | CN 107974030 A | 01/05/2018 |
| | | EP 3315546 A1 | 02/05/2018 |
| | | EP 3315546 B1 | 19/06/2019 |
| | | JP 2018-070881 A | 10/05/2018 |
| | | KR 10-1861482 B1 | 28/05/2018 |
| | | TW 201815979 A | 01/05/2018 |
| | | TW I655233 B | 01/04/2019 |
| | | US 10472490 B2 | 12/11/2019 |
| | | US 2018-0112056 A1 | 26/04/2018 |
| | | WO 2018-080013 A1 | 03/05/2018 |

Form PCT/ISA/210 (patent family annex) (January 2015)

**EP 3 904 448 A1**

## REFERENCES CITED IN THE DESCRIPTION

**Patent documents cited in the description**

- KR 100988999